(19) Europäisches Patentamt
European Patent Office
Office européen des brevets

(11) **EP 3 930 479 B1**

(12) **EUROPEAN PATENT SPECIFICATION**

(45) Date of publication and mention
of the grant of the patent:
**16.07.2025 Bulletin 2025/29**

(21) Application number: **20709675.1**

(22) Date of filing: **27.02.2020**

(51) International Patent Classification (IPC):
*A23L 17/00* *(2016.01)*     *A23P 20/18* *(2016.01)*
*A23P 20/12* *(2016.01)*     *A23P 20/10* *(2016.01)*
*A23P 30/00* *(2016.01)*

(52) Cooperative Patent Classification (CPC):
**A23P 20/18; A23L 17/75; A23P 20/10; A23P 20/12; A23P 30/00**

(86) International application number:
**PCT/GB2020/050465**

(87) International publication number:
**WO 2020/174244 (03.09.2020 Gazette 2020/36)**

(54) **FROZEN BATTERED FISH PRODUCT**

GEFRORENES PANIERTES FISCHPRODUKT

PRODUIT DE POISSON CONGELÉ ET PANÉ

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **27.02.2019 GB 201902609**

(43) Date of publication of application:
**05.01.2022 Bulletin 2022/01**

(73) Proprietor: **Young's Seafood Limited**
**Grimsby Lincolnshire DN31 3SW (GB)**

(72) Inventor: **BURNETT, Alan, Michael**
**Lincolnshire DN31 3SW (GB)**

(74) Representative: **Murgitroyd & Company**
**165-169 Scotland Street**
**Glasgow G5 8PL (GB)**

(56) References cited:
**EP-A2- 0 903 084**       **WO-A1-93/15619**
**US-A- 4 386 559**        **US-A- 4 511 583**
**US-A1- 2017 245 507**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of invention

The present invention relates to frozen battered fish products and processes for preparing frozen battered fish product, and in particular, although not exclusively to frozen battered fish products with a reduced saturated fat content.

Background art

The preparation of battered food products typically involves coating a frozen or semi-frozen foodstuff such as fish or meat in a batter. Batter coating may be a multi-step process to facilitate good adhesion between the foodstuff and coating. When battered food products are designed to be frozen, transported and stored for later consumption, it is common to carry out a pre-frying step to set the batter coating prior to cooling, packaging and transportation. The batter composition typically includes one or more leavening agents which produce gas upon frying, creating an aerated batter structure. The batter sets upon frying to create a light, crispy texture.

Unlike deep-frying a freshly battered food item for immediate consumption, the pre-frying step for frozen food products is sufficiently short that the foodstuff encased by the batter remains frozen or semi-frozen. After pre-frying, the entire battered food product is then frozen for packaging and transportation. A consumer is then able to carry out a final cooking step of frying or more often oven baking the product.

Current processes seek to replicate the crisp, ridged texture and appearance of freshly battered and fried foods in mass production. EP0903084 discloses a process for creating an 'embossed' pattern on a surface of battered food during a pre-frying step. The method uses a belt of recesses and ridges which define an embossing surface on a submerger conveyor. As the leavened batter is heated within the fryer, gas pockets are formed which increases buoyancy, causing the food product to float into contact with the submerger conveyor. Regions of the batter coating then rise into the recesses of the conveyor whilst other regions are supressed by the ridges of the conveyor. The arrangement of recesses and ridges thereby creates a corresponding pattern of ridges and troughs on the surface of the set batter coating. US4386559A discloses a method for heat setting a battered comestible with a ridged topography which is achieved by allowing unset batter to droop between gaps in a conveyor as it is lowered into a fryer.

In recent years there has been an increase in consumer awareness of the adverse health implications associated with high levels of saturated fats in food. Furthermore, environmental concerns over the production of palm oil make it a less desirable ingredient for consumers.

US2017245507A1 discloses a method of reducing fat uptake into battered food upon frying, thereby improving the healthiness of the end product. Cellulose ethers are used within batter or bread coatings. These materials are widely used to reduce oil uptake into batter coatings. The battered products are also briefly immersed in an aqueous solution prior to frying, which further limits oil uptake. However, reducing the oil content of the batter is likely to affect the texture, taste and appearance of the fried batter, as well as its physical properties when frozen. The inclusion of cellulose ethers may also impact on the overall taste and texture of the food product. Similar "films" to reduce oil uptake during frying are disclosed in WO93/15619A1 (which uses water-dispersible film-forming proteins) and US4511583A (which uses a gelatin and starch mixture).

A switch to an alternative frying medium with lower saturated fat content such as certain vegetable oils can provide an alternative way to improve the healthiness of the food product. However, changing the frying medium can also affect the texture of the fried batter coating, as significant quantities of the oil are incorporated into the batter structure upon frying. Fried batter with a lower saturated fat content is typically more brittle when frozen. This creates problems with packaging and transportation, as the frozen food product is easily damaged.

There is therefore a need for a frozen battered food product which contains lower amounts of saturated fat and is not damaged easily when transported.

Summary of the Invention

An objective of the present invention is to provide a frozen battered food product which contains no or a reduced saturated fat content as part of a fried batter coating. This is achieved by changing the frying medium used during the pre-frying step from one with a high saturated fat content such as palm oil to one with a lower saturated fats content such as a vegetable oil comprising sunflower oil and/or rapeseed oil. In changing the frying medium, the fat content in the fried batter coating is also changed. A lower saturated fat content in the fried batter renders it less malleable when frozen.

A further objective of the present invention is to provide a frozen food product with a patterned batter coating that is not easily damaged during packaging and transportation. The frozen batter coating is particularly fragile when the fried batter has a lower saturated fat content. The present invention provides a protective aqueous layer which, when frozen, protects the patterned batter coating from damage caused by handling and movement during packaging, transportation and storage.

Yet another objective of the present invention is to provide a battered food product with lower saturated fat content which retains a crispy and bubbly batter texture upon final cooking by a consumer. The present invention achieves this objective by providing an aqueous layer to protect the structure of the batter. By freezing the fish product rapidly after applying the protective layer, liquid does not penetrate the batter coating significantly. As the product remains frozen until the final cooking step, there is no significant ingress of liquid into the batter during packaging, transportation and storage. When placed into a hot oven, the aqueous layer on the surface of the batter coating rapidly evaporates, leaving a crispy batter coating when the product is cooked.

According to a first aspect of the present invention there is provided a frozen battered fish product which comprises: a fish substrate with an external surface; a fried batter coating with an internal face and an external face, wherein the internal face is adjacent the external surface of the fish substrate and the external face is separated from the external surface of the fish substrate by a separation distance, the fried batter coating having first regions and second regions, wherein the separation distance of the second regions is greater than the separation distance of the first regions, the first and second regions of the coating representing a pre-defined pattern extending over a portion of the external face of the coating; and an aqueous-based protective layer covering the coating at at least the portion of the external face of the coating with the pre-defined pattern.

The pre-defined pattern comprises ridges (second regions) which are raised up from the fish substrate relative to troughs (first regions). The pre-defined pattern over a portion of the batter coating provides a battered fish product with a more textured appearance. The intention of this is to more closely resemble a freshly battered and fried fish fillet obtainable from a restaurant or takeaway. The textured surface further provides a bubbly batter with a more natural look compared to conventionally battered frozen food products, which maintains crispiness when oven baked. The protective layer over the patterned surface is intended to prevent or substantially limit damage to the bubbly batter structure when frozen during transportation.

The aqueous-based protective layer can be any aqueous liquid with a water content exceeding about 80 wt% suitable for use in foodstuffs. Suitable liquids include potable water, ale, lager, cider and beer. Brine may also be used. Where alcoholic liquids such as beer are used, this may have a further effect of flavouring the batter coating, as some flavoured compounds from the liquid may remain after the final cooking stage. Volatile compounds within some liquids may generate a distinctive aroma when the product is cooked, which may improve customer experience. The content of alcohol or other solutes within the liquid should not be so high that the physical properties such as freezing point of the liquid are significantly different compared to those of potable water. This may affect the formation of a frozen aqueous protective layer, and may cause undesirable infiltration of the liquid into the batter coating.

The aqueous protective layer may represent up to 10 wt % of the frozen battered fish product. Typically, the aqueous protective layer represents between 0.9 wt % and 3 wt % of the frozen battered fish product. Preferably, the aqueous protective layer may represent between 0.5 to 5 wt %; 0.8 to 3 wt %; 1 to 3 wt %; 1 to 2.5 wt % or; 1.1 to 2.2 wt % of the frozen battered fish product. Such ranges are configured to provide a protective layer which is sufficiently thick to protect the patterned batter when frozen, whilst not being too thick such that an undesirable volume of water remains on the surface of the batter during cooking.

The fish substrate may be a natural fish fillet or a regularly shaped fish substrate. A regular shape may be any shape including trapezoidal, cylindrical or cuboidal, or a regular shape which resembles the shape of a natural fish fillet.

The external surface of the fish substrate may comprise an upper surface, an opposed planar underside surface and at least one side surface. Where the fish substrate is a natural fillet or of a regular shape which resembles a natural fillet, the surface which would be recognised as an upper surface by a consumer is the upper surface. The upper surface may, for example, be profiled compared to a substantially planar underside surface.

Particularly where the fish substrate has a profiled or otherwise clearly defined upper surface, the portion of the batter coating with the pre-defined pattern preferably extends over a majority of the upper surface, rather than, for example, over the substantially planar underside surface. A substantially planar underside surface increases ease of packing and oven cooking. The pre-defined pattern would more readily be damaged if on the underside surface of the fish product during packaging and oven cooking.

Preferably, the aqueous protective layer covers a majority of the fried batter coating adjacent the upper surface and the at least one side surface. This ensures that the pre-defined pattern on the batter adjacent the upper surface of the fish substrate is protected, whilst also protecting the batter coating on the at least one side surface from impact damage.

According to a second aspect of the present invention is provided a process for preparing a frozen battered fish product comprising: coating a frozen or semi-frozen fish substrate with a batter containing a leavening agent; introducing the fish substrate having the batter coating into a fryer containing a frying medium; modifying the coating on the fish substrate by creating a pre-defined pattern of ridges and troughs on at least a region of the batter coating; removing the fish substrate having the patterned batter coating from the fryer; applying an aqueous-based liquid to the patterned batter coating to form a protective layer on at least the region of the coating having the pre-defined pattern; freezing the fish substrate having the batter coating with the pre-defined pattern and protective layer.

The batter coating may be applied in either a three-step or a five-step process. The three-step process may comprise applying an initial 'adhesion' layer of relatively thin batter, followed by an intermediate layer comprising crumbs and finally the top coat of batter including a leavening agent. The five-step process may additionally comprise pre-washing and dusting steps prior to applying the adhesion layer, intermediate layer and top coat. The thickness of a layer applied to a food product can be measured in terms of a *'yield'* ($Y$) of the food product. This is defined by the following formula:

$$Y = \frac{M_c}{M_{uc}} \times 100$$

where $M_c$ is the mass of the food product after the coating is applied and $M_{uc}$ is the mass of the food product before the coating is applied. Yield is typically expressed as a weight percentage relative to the uncoated food product.

The thickness of the top coat of leavened batter applied to the fish substrate in the present invention may be greater than the thickness of the top coat applied in conventional processes where a pre-defined pattern is not created on the batter coating. In order to keep the final yield similar to conventional processes, the thickness of the adhesion layer may be reduced by using blowers or jets of air to blow the coating material off the fish substrate, or by adjusting the viscosity of the adhesion batter by adjusting its water content.

The viscosity of the top coat can also be varied by adjusting its water content. The viscosity of the leavened batter coating needs to be high enough that the gas pockets created within the batter on frying are strong enough to retain their structure, but not so high that the expansion of gas pockets in the batter during frying is restricted. Suitable viscosities for the coating material can be readily determined in practice by those skilled in the art.

The temperature of the top coat of leavened batter should be controlled. Preferably, the temperature of the top coat of leavened batter upon application to the fish substrate should be between 5 °C and 12 °C, or more preferably between 8 °C and 10 °C. This allows the activity of the leavening agent prior to and during frying to be controlled, such that when fried the desired degree of expansion of the batter coating is achieved.

In the three-step batter coating process as described herein, the yield of the fish product after application of the adhesion layer is preferably within the range of from 103% to 115%, or more preferably from 105% to 109%. The yield of the fish product after application of the intermediate layer comprising crumbs is preferably within the range of from 117% to 135%, or more preferably from 126% to 132%. The yield of the fish product after application of the final top coat of batter containing the leavening agent, before frying, is preferably within the range of from 160% to 190%, or more preferably from 163% to 185%. All yields are relative to an uncoated fish substrate.

The leavening agent may comprise any substance or substances suitable for use in foodstuffs which when introduced into the batter and then placed in hot oil will react to release a gas such as carbon dioxide. The amount of leavening agent influences the formation of the pre-defined pattern on the surface of the batter. The amount of leavening agent should be sufficient to ensure satisfactory pattern formation, but not so high that the taste is affected or excess gas is produced which may rupture the batter coating. Preferably, the leavening agent comprises at least one basic component, for example sodium bicarbonate, and at least one acidic component. An example of an acidic component is sodium acid pyrophosphate. Monocalcium phosphate may also be used with the acidic component. The amount of basic component in the batter composition is preferably within the range of from 0.75% to 2.5%, or more preferably from 1.2% to 2.0%. The amount of acidic component in the batter composition is preferably within the range of from 0.9% to 3.5%, or more preferably from 1.6% to 2.8%. The total amount of leavening agent in the top coat batter is preferably within the range of from 1.7% to 6.0%, or more preferably from 2.8% to 4.8%. These percentages are weight percentages based on the mass of dry ingredients, that is to say excluding added water but including the moisture content of other ingredients.

The fryer may be a continuous fryer wherein the battered fish product is transported through the oil via a system of conveyors. The system of conveyors may comprise an in-feed conveyor, a first submerger conveyor and a base conveyor. Battered fish products entering the frying medium on the in-feed conveyor initially sink towards the base of the fryer. Once the leavening gases start to form within the batter, the fish product rises under its own buoyancy and comes into contact with the first submerger conveyor. The time period between the fish product entering the frying medium and rising in to contact with the first submerger conveyor is defined as a *'pre-patterning residence time'*. It is important to ensure that setting of, or formation of a skin on at least the part of the coating to have the pre-defined pattern does not begin to any significant extent before the fish product comes into contact with the first submerger conveyor. The maximum acceptable pre-patterning residence time depends on the temperature of the frying medium. For frying temperatures within the range of from 190 °C to 230 °C, the pre-patterning residence time is preferably within the range of from 1.5 to 4 seconds, or more preferably from 2 to 3 seconds. The pre-patterning residence time can be varied by adjusting the depth of the frying medium within the fryer. Alternatively, the path length taken by the fish product can be varied by adjusting the position and inclination of the in-feed conveyor which transports the fish products from their entry into the fryer to below the first submerger conveyor.

The first submerger conveyor may comprise a flexible belt attached to a series of slats extending transversely to the direction of travel of the belt, the slats being provided with recesses arranged to form a pre-defined pattern. The slats are preferably coated with a suitable

'non-stick' material capable of withstanding frying temperatures such as polytetrafluoroethylene (PTFE). The slats are preferably arranged adjacent to, but spaced apart from each other. When submerged in the frying medium on an underside of the first submerger conveyor, the slats form a substantially planar surface. Preferably, at least some of the recesses extend over at least two slats so that gaps between adjacent slats provide vents for the escape of steam or other gases. The recesses may in addition be directly open to the exterior to provide further means for gases to escape, and to enable the frying medium to enter the recesses to promote setting of the batter coating in the pre-defined pattern. Adjoining slats are preferably spaced apart by a distance of 3 mm or less, or more preferably from 1 to 2 mm. This is to prevent significant expansion of the batter coating into the gaps between slats upon frying. A first portion of the first submerger conveyor may be inclined slightly to receive the batter coated fish substrates.

The shapes of the recesses forming the predefined pattern can be changed depending on the pattern required on the batter coating of the fish product. Over the substantially planar surface formed by the slats, the ratio of the area occupied by recesses (excluding gaps between slats) is preferably within the range of from 0.4 to 3.0, or more preferably from 1.20 to 1.85. The recesses may be of similar or different shapes to each other. For example, at least some of the recesses may be elongate with rounded ends, and the centre lines of the recesses may be arranged to extend at different angles to the direction of travel. The width of the recesses may be in the range of from 4 mm to 40 mm, preferably in the range of from 6 mm to 15 mm. The depth of the recesses may be in the range of from 5 mm to 25 mm, preferably from 9 mm to 15 mm. Walls of the recesses may extend generally perpendicular to the substantially planar surface, or may be inclined or tapered in a direction away from the surrounding unrecessed portions. This facilitates easy removal of the food product from the slats. The walls of each recess may be inclined to the perpendicular of the substantially planar surface within the range of from 2.5° to 10°, preferably approximately 5°. Edges between the walls of the recesses and unrecessed portions may be bevelled.

The battered fish substrate may remain in contact with the first submerger conveyor with the pre-defined pattern of recesses for substantially the entire length of the path of the fish substrate through the frying medium. Preferably, however, the battered fish substrate remains in contact with the first submerger conveyor for only a portion of the length of its path through the frying medium. As a result of close contact with the patterned surface defined by the slats of the first submerger conveyor, some regions of the batter coating may be excluded from contact with the frying medium. These will therefore be cooked to a lesser extent than other regions and may be insufficiently set and paler in colour. The system of conveyors may therefore further comprise a second submerger conveyor (the 'frying-out' conveyor) for maintaining the battered fish substrate submerged in the frying medium after it has left the patterned surface of the first submerger conveyor. This allows regions less exposed to the oil to be cooked and set to a desired extent, and provides a more uniform setting and colour of the batter coating over the whole fish substrate. The frying-out conveyor is preferably provided with a wire belt for contacting the battered fish substrate and assisting its travel through the remainder of the fryer, as is commonly used in conventional submerger conveyors.

The battered fish substrate needs to remain in contact with the patterned surface of the first submerger conveyor for a time sufficient for the pattern to form and sufficiently set on the batter coating. Preferably, the battered fish substrate is in contact with the patterned surface for a time within the range of from 10 to 50 seconds, or more preferably from 15 to 30 seconds. The optimal time will depend on the composition of the batter coating, the temperature of the frying medium, and the desired final appearance of the product.

Where a frying-out conveyor is used, it is important to avoid significant further expansion of the batter after the fish substrate has left the patterned surface, as this could lead to the pattern on the batter coating becoming less well defined or lost. Where a frying-out conveyor is used, the battered fish substrate is preferably in contact with the frying-out conveyor for a period within the range of from 10 to 50 seconds, or more preferably from 15 to 30 seconds. In general, increasing the time in contact with the patterned surface with respect to the time in contact with the frying-out conveyor will increase the definition of the pattern on the surface and the colour differential between ridged regions and trough regions. The total frying time (encompassing the pre-patterning residence time and the time in contact with the first submerger conveyor and the frying-out conveyor) is preferably within the range of from 21.5 to 104 seconds, or more preferably from 32 to 63 seconds.

The temperature of the frying medium is preferably within the range of from 190 °C to 230 °C, or more preferably from 200 °C to 210 °C. Preferably, the frying medium comprises less than 50 wt % saturated fats. Vegetable oils including rapeseed (canola), soybean and sunflower oils are suitable for use as the frying medium. The saturated fats content of these oils are significantly lower than traditional frying oils such as palm oil or oils derived from animal fat. The frying medium may comprise a mixture of different oils, each with a different saturated fat content.

The aqueous-based protective layer is applied as a liquid following removal of the fish substrate having a fried batter coating from the fryer. The liquid may be any aqueous liquid suitable for use in foodstuffs with a water content of at least 80 wt %, and is preferably potable water, beer, ale, cider or lager. Where a carbonated liquid such as lager is used, this is typically degassed prior to application.

As indicated, the thickness of the protective layer should be sufficient to provide adequate protection to the patterned batter coating when frozen, but not so thick that significant water remains on the fish product upon cooking, causing the batter to become soggy. Expressed in terms of yield as defined herein compared to the fish substrate having a fried batter coating before applying the protective layer, the yield of the battered fish substrate after application of the aqueous protective layer may be in the range of from 100% to 110%, or preferably within the range of from 101% to 103%, or more preferably from 101.2% to 102.2%.

Application of the aqueous layer may be achieved by passing the fish substrate with the fried batter coating to be protected through a mist or spray of atomised aqueous liquid. The direction of the mist or spray may be angled such that upper and side faces of the battered fish substrate are adequately covered, and raised features such as ridges on the upper face of the batter coating are sufficiently covered. The liquid may be atomised by any atomiser commonly used in the field, for example a spinning disc or a nozzle. Multiple atomisers may be used and may be arranged in one or more rows extending along the direction of travel of the conveyor belt that transports the fish substrate. Multiple atomisers may also be arranged in one or more rows aligned perpendicular to the direction of travel in order to give spray coverage over the full belt width.

The temperature of the liquid upon application to the batter coating of the fish substrate may be controlled. The temperature of the liquid upon atomisation is preferably in a range of from 4 °C to 15 °C, or more preferably from 6 °C to 9 °C. The use of chilled aqueous solution provides additional cooling to the fried batter coating between exiting the fryer and entering the freezer. This reduces the temperature differential between the batter surface and air within the freezer, speeding up the freezing process. The use of a chilled solution also limits evaporation of the liquid upon contact with the hot surface of the fried batter.

The time period between a battered fish substrate exiting the fryer and the aqueous protective layer being applied ('*post-frying time period*') is preferably in a range of from 1 second to 15 seconds, or more preferably from 5 seconds to 9 seconds. The post-frying time period should be sufficiently long that the fried batter coating cools down enough for a chilled aqueous spray to be applied effectively. The post-frying time period can be controlled by adjusting the path length of the fish substrate between the fryer and spraying. The time period between the application of the aqueous protective layer and the fish substrate entering the freezer ('*post-spraying time*') may also be carefully controlled. The freezing process should begin soon after spraying, to prevent significant amounts of the aqueous protective coating infiltrating the fried batter. Infiltration of liquid into the batter may also be limited to a certain extent by the oil in the batter. Significant amounts of water within the batter may damage the batter structure when frozen. Water within the fried batter coating may also not evaporate readily upon cooking, leading to a reduction in the crispiness of the batter coating. The post-spraying time can be controlled by adjusting the path length of the fish substrate between the spray and the freezer. Adjusting the rate of the post-spray conveyor is also possible, although less preferable as it leads to a variation in throughput. The post-spraying time is preferably within a range of from 1 to 15 seconds, or more preferably from 1 to 5 seconds.

The fish substrate may remain within the freezer for any time period until it is completely frozen. Preferably, the temperature and setup of the freezer are such that the fish product is completely frozen within 120 minutes.

Brief description of drawings

A specific implementation of the present invention will now be described, by way of example only, and with reference to the accompanying drawings in which:

Figure 1 is a schematic representation of apparatus capable of preparing a battered fish product according to one specific implementation of the present invention;

Figure 2 is a longitudinal cross-sectional view through a fryer according to one specific implementation of the present invention;

Figure 3 is a magnified view of the inlet region of the fryer of Figure 2;

Figure 4 is a magnified view of a region of the fryer of Figure 2;

Figure 5 is a plan view of an arrangement of slats on a first submerger conveyor in the fryer of Figure 2, showing a pre-defined pattern of ridges and recesses;

Figure 6 is a magnified view showing the interaction of a batter coating of a fish substrate with the ridges and recesses of slats on the first submerger conveyor within the fryer of Figure 2;

Figure 7 is a simplified representation showing the arrangement of the fryer and spray chamber according to one specific implementation;

Figure 8 is a top view of the spray chamber of Figure 7, showing an arrangement of atomising nozzles according to one specific implementation;

Figure 9 is a perspective view of the spray chamber of Figure 7;

Figure 10 is a magnified view of the batter coating of a fish substrate showing the application of atomised liquid according to one specific implementation;

Figure 11 is a simplified schematic of the process for creating a frozen battered fish product according to one specific implementation;

Figure 12 is a perspective view of an example frozen fish product according to one specific implementation;

Figure 13 is a top view of an example frozen fish product according to one specific implementation;

Figure 14 is a cross-sectional view of an example frozen fish product according to one specific implementation.

Detailed description of preferred embodiment of the invention

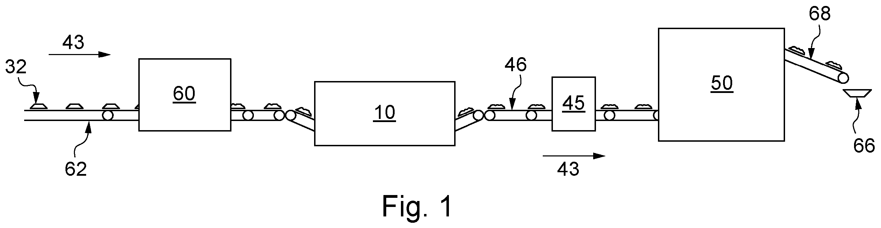

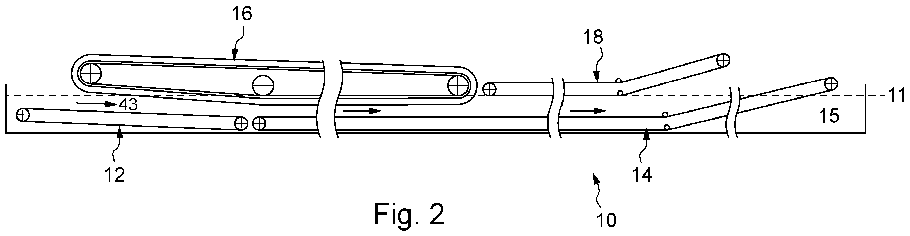

Referring to the accompanying drawings, and initially to Fig. 1 and Fig. 2, apparatus capable of making a frozen battered fish product is provided. The apparatus is capable of operation as a continuous production line and comprises a series of conveyor belts to transport a fish substrate 32, including a batter section conveyor 62, a frying in-feed conveyor 12, a frying base/exit conveyor 14, a spraying section conveyor 46 and a post-freezing conveyor 68. The apparatus further comprises a battering section 60, a fryer 10, a spraying section 45 and a freezer 50.

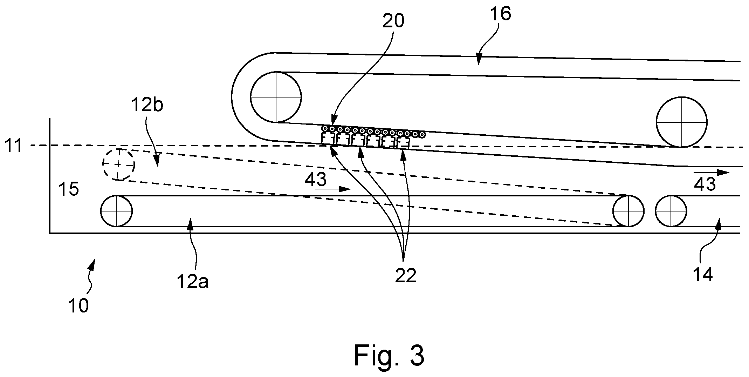

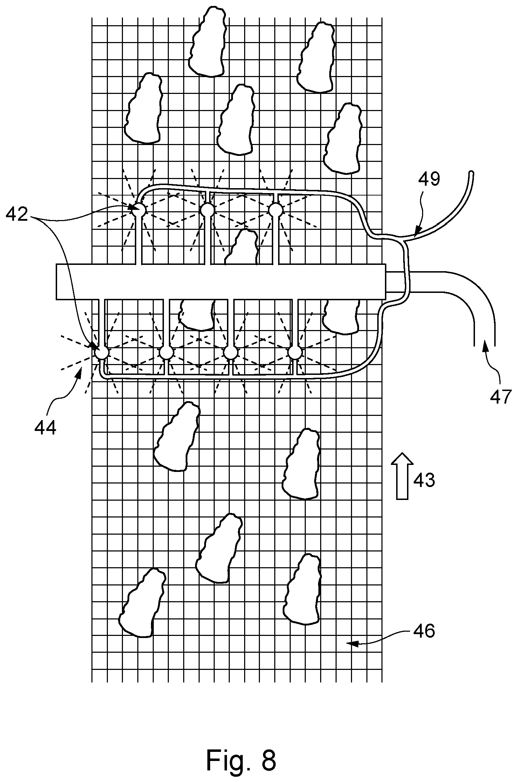

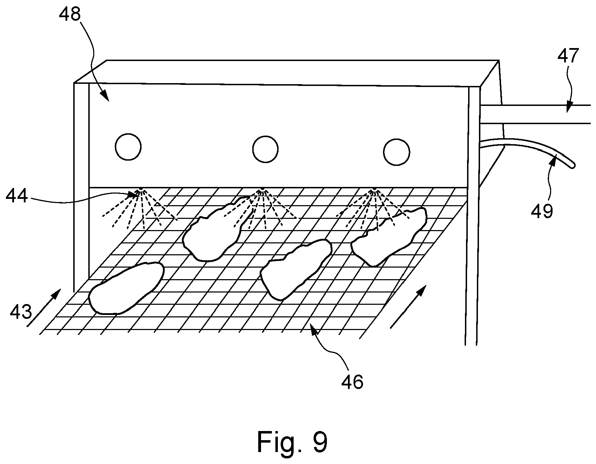

Referring now to Fig. 2-5, fryer 10 further comprises a frying medium 15 with an oil level 11. At least partially within frying medium 15 is frying in-feed conveyor 12, a first end of frying base/exit conveyor 14, a first submerger conveyor 16 and a frying out conveyor 18. First submerger conveyor 16 is equipped with a chain 20 to which slats 22 are attached. Slats 22 are aligned substantially parallel and when on an underside of first submerger conveyor 16, lower faces of slats 22 define a substantially planar surface 27. Within substantially planar surface 27, adjacent slats 22 are separated by a separation distance 23. A pre-defined pattern of ridges 26 and troughs 24 extend over substantially planar surface 27 defined by slats 22. Troughs 24 are generally of constant width 25, and are arranged in an asymmetrical pre-defined pattern on surface 27. First submerger conveyor 16 and frying out conveyor 18 are separated by a gap 17. Frying out conveyor 18 comprises a wire belt. Referring now to Fig. 1 and Fig. 7-9, a second end of frying base/exit conveyor 14 is outside fryer 10 adjacent spraying section conveyor 46 which extends through spraying section 45. Spraying section 45 comprises a hood 48, an arrangement of atomising nozzles 42, liquid inlet pipe 47 and air inlet pipe 49. An exit of fryer 10 and an entry of spraying section 45 are separated by distance 54. Nozzles 42 are arranged in two rows across a width of spraying section conveyor 46 to give spray coverage over the full belt width.

An entrance to freezer 50 is separated from an exit of spraying section 45 by distance 52. Conveyor 46 extends into freezer 50. Freezer 50 comprises a series of conveyors in a low temperature environment with a total path length designed for a given freezing time. Postfreezing conveyor 68 connects freezer 50 with a packaging area.

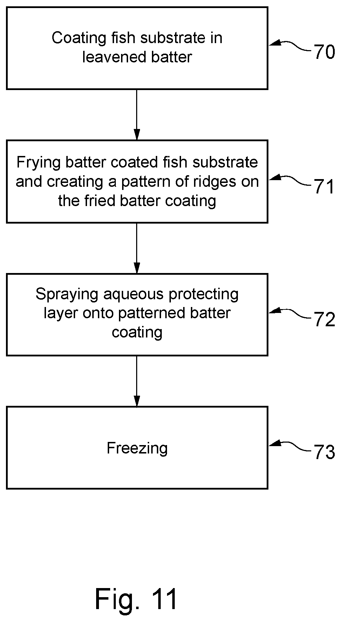

With reference to Fig. 11, the process for creating a frozen battered fish product according to this specific embodiment comprises batter coating at step 70, par-frying at step 71, coating in an aqueous protective layer at step 72 and freezing at step 73. Referring again to Fig. 1, a fish substrate 32 travels generally in direction 43, although lateral and vertical movement may also occur.

Fish substrate 32 is a frozen fish substrate shaped generally to resemble a natural fish fillet shape. The mass of fish substrate 32 is approximately 64 g. Fish substrate 32 travels along batter section conveyor 62 in direction 43 until it enters battering section 60. Within this section, fish substrate 32 is coated in batter using standard equipment in a three-coat process comprising an initial adhesion layer of batter, a layer of crumbs and a top coat of batter containing leavening agent.

The adhesion batter comprises the following ingredients (mass percentages of dry ingredients shown in brackets): wheat flour (47.0 wt%); wheat starch (29.0 wt%); modified starch (19.0 wt%); salt (3.1 wt%); pepper (2.0 wt%). The yield after the adhesion layer is applied is approximately 107% relative to the uncoated fish substrate 32.

The layer of crumbs comprises the following ingredients (mass percentages of dry ingredients shown in brackets): breadcrumbs (89.3 wt%); flavouring (5.0 wt%); wheat flour (3.0 wt%); salt (1.4 wt%); oil (1.3 wt %). The yield after the layer of crumbs is applied is approximately 130% relative to the uncoated fish substrate 32.

The top coating of leavened batter comprises the following ingredients (mass percentages of dry ingredients shown in brackets): wheat flour (70 wt%); fat (10 wt%); salt (5.0 wt%); starch (5.0 wt%); raising agents (3.5 wt%); skimmed milk powder (2.5 wt%); flavouring (2.0 wt%); dextrose (1.0 wt%). The raising agents consist of 1.48 wt% sodium bicarbonate, 1.65 wt% of sodium acid pyrophosphate and 0.37 wt% of monocalcium phosphate. The yield after the top coating of batter is applied is approximately 172% relative to uncoated fish substrate 32. The top coating of batter is at a temperature of between 8 °C and 10 °C upon application to the coated fish substrate 32.

Before application to the fish substrate, the viscosities of the batter of the adhesion layer and of the top coat are measured to maintain consistency using a flow cup measuring device, as typically used in the art. The viscosity of the adhesion batter is represented by a flow time of 30 seconds through a flow cup of a volume of approximately 106 cm$^3$ having an aperture of 4.75 mm in diameter, taking the end of the flow as being the point at which the flow ceases from the aperture. The viscosity of the top coat of batter is represented by a flow time of 40 seconds through a flow cup of approximately 106 cm$^3$ and an aperture of 7.00 mm in diameter, taking the end of the flow as being the point at which the flow ceases from the aperture.

Fish substrate 32 having batter coating 34 then exits battering section 60 and passes onto frying in-feed conveyor 12, whereupon it travels downwardly into frying medium 15 within fryer 10. Frying medium 15 is a mixture of oils comprising sunflower oil, rapeseed oil and palm oil. Referring now to Figs. 1-3, fish substrate 32 having batter coating 34 is carried by in-feed conveyor 12 until it is completely submerged by frying medium 15 (its uppermost surface is below oil level 11) and it is beneath the first submerger conveyor 16. The incline of in-feed conveyor 12 may be adjusted between position 12a and position 12b to control the rate of entry of fish substrate 32 into fryer 10 to achieve a pre-patterning residence time of between 2 and 3 seconds. The gap between the upper run of in-feed conveyor 12 and the lower run of first submerger conveyor 16 is sufficient to allow the batter coated fish substrate to pass through with a clearance of 10 to 20 mm.

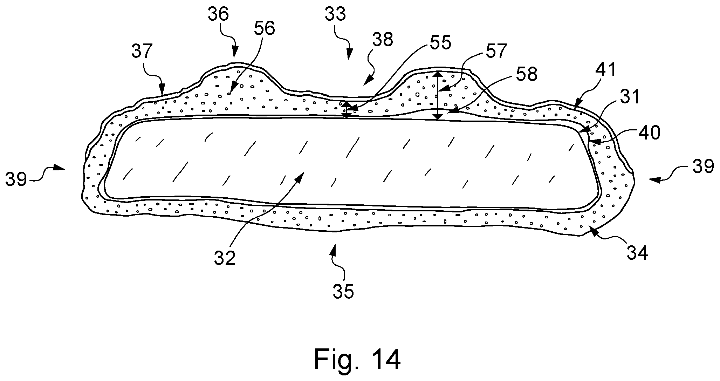

Once in the frying medium 15, which is at a temperature of from 205 °C, batter coating 34 starts to release steam and other gases including carbon dioxide as water in batter coating 34 evaporates and the leavening agent in batter coating 34 starts to react. As shown in Fig. 14, gases become trapped in gas pockets 56 within the batter 34 or gas pockets 58 between external surface 31 of fish substrate 32 and internal surface 40 of batter coating 34. These air pockets cause the batter coated fish substrate to become buoyant. The pre-patterning residence time is 2 seconds. Fish substrate 32 then rises into contact with the patterned surface of ridges 26 and recesses 24 created by slats 22 on the underside of first submerger conveyor 16.

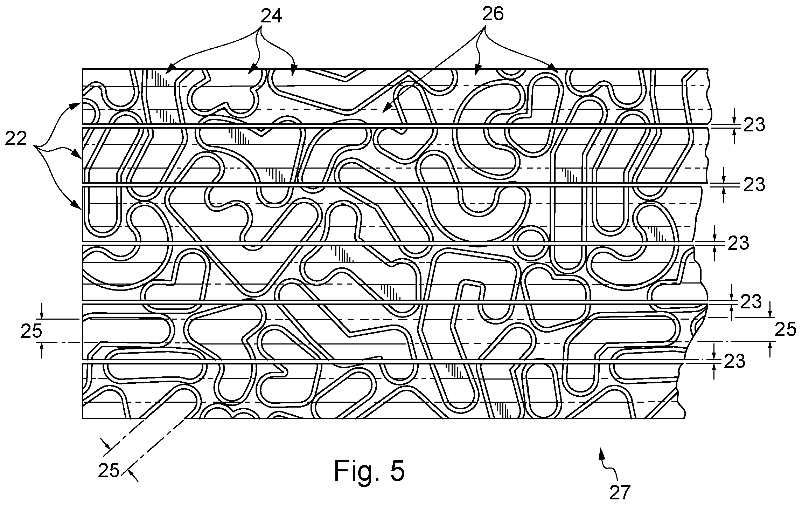

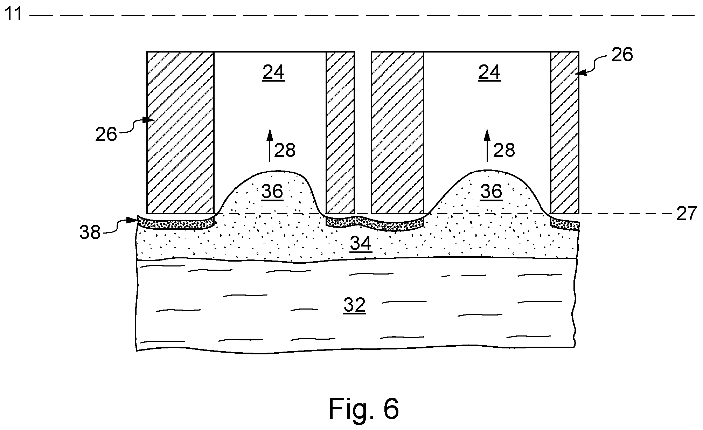

Referring now to Figs. 5 and 6, once in contact with the substantially planar surface 27 with a pattern of ridges 26 and recesses 24 created by the arrangement of slats 22, the batter coating 34 of fish substrate 32 expands upwards in direction 28 into recesses 24. Water vapour and other gases escape upwards through openings at the top of recesses 24 (not shown). Gases also escape through the gaps 23 between slats 22. The interior of recesses 24 contain frying medium, which promotes setting of at least part of the outer batter coating 34. The degree of expansion into recesses 24 is dependent on the proportion of leavening agent in batter coating 34, the temperature of frying medium 15, the level 11 of frying medium 15 and the time that coated fish substrate 32 remains in contact with surface 27. Oil level 11 is arranged such that it is immediately above the uppermost part of the recesses 24 of slats 22. Expansion of batter coating 34 will typically not occur above oil level 11. This arrangement therefore allows for sufficient expansion of batter 34 into recesses 24 without expanding above the uppermost end of recesses 24, which would create difficulties in the release of fish substrate 32 from first submerger conveyor 16. The gaps 23 between slats 22 are not sufficient for there to be any significant expansion of batter coating 34 into these spaces.

As the substantially planar surface 27 with the pre-defined pattern is carried through the oil on the first submerger conveyor 16, fish substrate 32 is maintained in contact with and stationary relative to it under the action of its own buoyancy and expansion into recesses 24. Fish substrate 32 remains in contact with the patterned surface for a period of between 9 and 20 seconds. At the end of this period, batter coating 34 is sufficiently set for the pattern of ridges to be retained on the surface of the batter 34 after fish substrate 32 leaves the patterned surface of the first submerger conveyor 16.

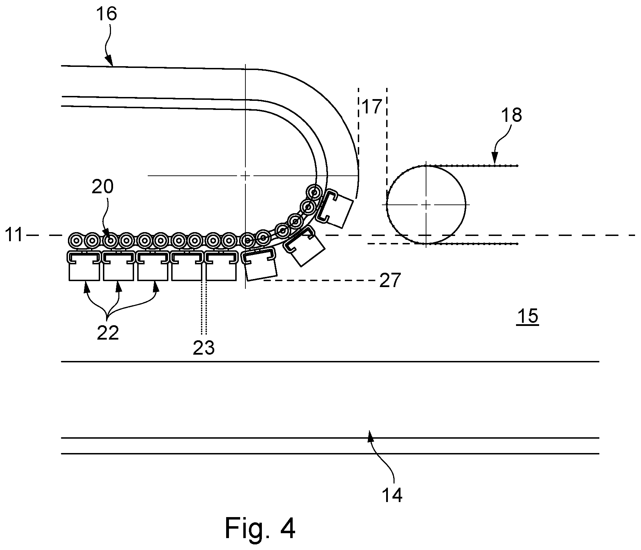

Referring now to Fig. 4, at the end of first submerger conveyor 16, chain 20 turns upwardly and slats 22 flex apart. This causes the set batter coating 34 of fish substrate 32 to peel away from slats 22. Slight tapering of recesses 24 aids in the release of the coated fish substrate from the first submerger conveyor 16.

As shown in Fig. 6, regions 38 of batter coating 34 adjacent ridges 26 may have been shielded from the oil and not cooked to the same extent as exposed regions within recesses 24. As the fish substrate 32 is separated from first submerger conveyor 16, it is held under the oil by frying-out conveyor 18. This allows less cooked regions 38 of batter coating 34 to become set, so that the coated fish substrate acquires a more uniform colour over its patterned surface.

Fish substrate 32 with batter coating 34 having a pre-defined pattern travels the remainder of the path through fryer 10 in contact with the wire belt of the frying-out conveyor 18.

The time period that the batter coated fish substrate is in contact with frying-out conveyor 18 is between 15 and 30 seconds.

Base conveyor 14 runs along the base of fryer 10 from a point adjacent to the end of in-feed conveyor 12. As shown in Fig. 2, towards the end of the fryer, base conveyor 14 and frying out conveyor 18 are inclined upwards. This assists the batter coated fish substrate to leave fryer 10.

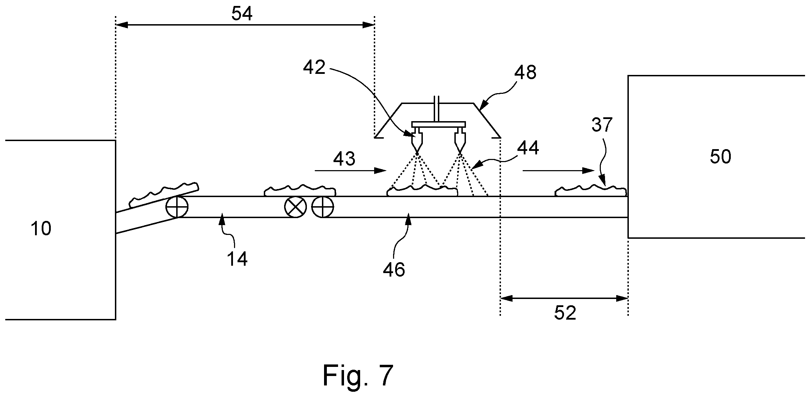

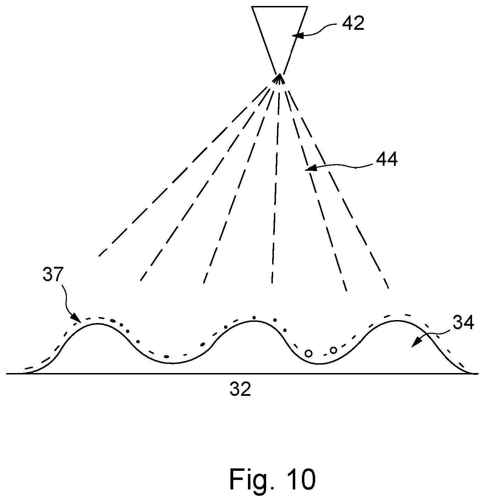

Referring now to Figs. 7-10, after exiting fryer 10, fish substrate 32 (with fried batter coating 34) continues to travel in direction 43 and passes from base conveyor 14 to spraying conveyor 46. Fish substrate 32 then enters spraying area 45. The distance 54 between the fryer exit and spraying area 45 is optimised such that the time taken for fish substrate 32 to travel distance 54 is between 5 and 9 seconds.

As fish substrate 32 passes underneath spray hood 48, batter coating 34 is coated by a spray 44 of water droplets created by passing pressured potable water through two rows of nozzles 42 arranged perpendicular to direction of travel 43. Spray 44 is generated at nozzles 44 by mixing pressured potable water from fluid inlet pipe 47 with air from air inlet pipe 49. Hood 48 is designed to keep the spray 44 within spraying area 45. The spacing and arrangement of nozzles 42, and the direction of atomised spray 44 is such that a full width of conveyor belt 46 is covered by atomised spray 44, and the spray 44 coats substantially the entirety of the patterned upper face 33 and side faces 39 of fried batter 34. The amount of water applied to the external face 41 of the batter coating is sufficient to increase the mass of fish product 30 by between 1% and 3% (by weight). The temperature of the water at the point of atomisation is between 6 °C and 9 °C.

Once aqueous protective layer 37 has been applied to external face 41 of the fried batter coating 34, fish substrate 32 continues to be carried by conveyor belt 46 in direction 43 out of spraying area 45. The protected batter coated fish substrate then enters freezer 50 after a post-spray time period of between 1 and 5 seconds, and remains in the freezer for a period of 120 minutes until it is completely frozen. After freezing, product 30 exits the freezer on conveyor 68 and is packaged into packaging 66.

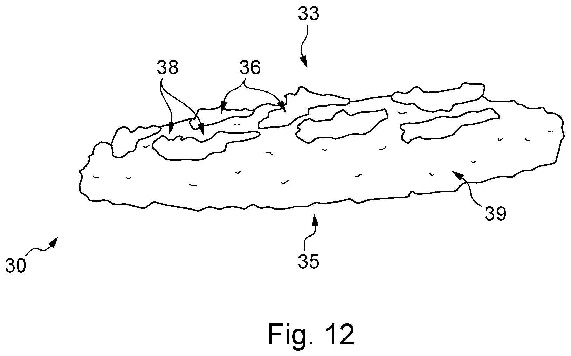

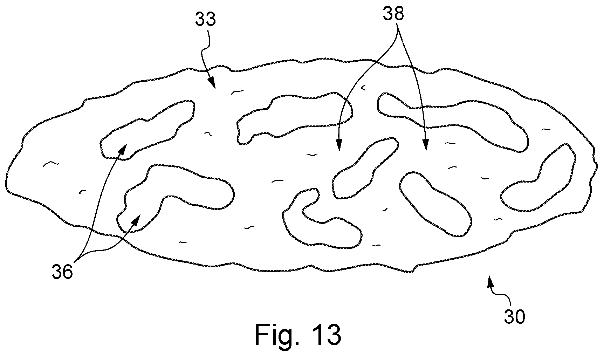

Referring now to Figs. 12-14, a battered fish product 30 produced using the apparatus and process described herein is provided with a pattern of ridges 36 and troughs 38 on upper face 33. A separation distance 57 between external surface 31 of fish substrate 32 and external surface 41 in a ridge region 36 is greater than a separation distance 55 in a trough region 38. This pattern corresponded to the arrangement of ridges 26 and recesses 24 on the surface of first submerger conveyor 16. The colour of the external face 41 of fried batter coating 34 is generally uniform across upper face 33, side faces 39 and underside face 35. A frozen aqueous protective layer 37 is disposed over the upper face 33 and side faces 39 of fish product 30, including over the pattern of ridges 36 and troughs 38 on upper face 33. Subsequent frozen transportation of a packaged fish product 30 showed considerably reduced damage to the pattern of ridges 36 on the upper face compared to products without aqueous protective layer 37. Additionally, subsequent cooking in an oven of the frozen battered fish product 30 with protective layer 37 resulted in a product with a crispy batter relative to products prepared with high saturated fat content by conventional methods without an aqueous protective layer.

## Claims

1. A frozen battered fish product (30), comprising:

   a fish substrate (32) with an external surface (31);
   a fried batter coating (34) with an internal face and an external face (41), wherein the internal face is adjacent the external surface (31) of the fish substrate (32) and the external face (41) is separated from the external surface (31) of the fish substrate (32) by a separation distance (55, 57);
   the fried batter coating (34) having first regions (38) and second regions (36), wherein the separation distance (57) of the second regions (36) is greater than the separation distance (55) of the first regions (38);
   the first and second regions (38, 36) of the coating (34) representing a pre-defined pattern extending over a portion of the external face (41) of the coating (34); and
   an aqueous-based protective layer (37) covering the coating (34) at at least the portion of the external face (41) of the coating (34) with the pre-defined pattern.

2. The fish product (30) of claim 1, wherein the protective layer (37) comprises one or more of a group comprising potable water, beer, ale, cider or lager.

3. The fish product (30) of claim 1 or 2, wherein the protective layer (37) represents between 0.9 wt % and 3 wt % of the frozen battered fish product (30).

4. The fish product (30) of any preceding claim, wherein the external surface (41) comprises an upper surface (33), an opposed planar underside surface (35) and at least one side surface (39).

5. A process for preparing a frozen battered fish product (30), comprising:

   coating a frozen or semi-frozen fish substrate (32) with a batter containing a leavening agent;
   introducing the fish substrate (32) having the batter coating into a fryer (10) containing a frying medium (15);
   modifying the coating (34) on the fish substrate (32) by creating a pre-defined pattern of ridges (26) and troughs (24) on at least a region of the batter coating (34);
   removing the fish substrate (32) having the patterned batter coating (34) from the fryer (10);
   applying an aqueous-based liquid to the patterned batter coating to form a protective layer (37) on at least the region of the coating (34) having the pre-defined pattern;
   freezing the fish substrate (32) having the batter coating (34) with the pre-defined pattern and protective layer (37).

6. The process of claim 5, wherein the batter containing a leavening agent is at a temperature of between 5 °C and 12 °C when applied to the fish substrate (32).

**7.** The process of claim 5 or 6, wherein the frying medium (15) comprises less than 50 wt % saturated fats.

**8.** The process of claim 5 or 6, wherein the frying medium (15) comprises a vegetable oil comprising sunflower oil and/or rapeseed oil.

**9.** The process of claims 5-8, wherein the aqueous-based liquid contains one or more of a group comprising potable water, beer, ale, cider and lager.

**10.** The process of claims 5-9, wherein the yield of the fish substrate (32) having the fried batter coating (34) is in the range of from 101% to 103% after application of the aqueous protective layer (37).

**11.** The process of claims 5-10, wherein one or more spinning discs are used to atomise the liquid during the step of applying the liquid to the coating (34).

**12.** The process of claims 5-10, wherein one or more nozzles (42) are used to atomise the liquid during the step of applying the liquid to the coating (34).

**13.** The process of claims 5-12, wherein a time period between the removal of the fish substrate (32) having the patterned batter coating (34) from the fryer (10) and the application of the protective layer (37) is in a range between 1 seconds and 15 seconds.

**14.** The process of claims 5-13, wherein a time period between the application of the protective layer (37) and the fish substrate (32) entering a freezer (50) is in a range between 1 and 15 seconds.

**15.** The process of claims 5-14, wherein the time between the fish substrate (32) having the coating (34) and protective layer (37) entering a freezer (50) and the time when the fish product (30) is completely frozen is not more than 120 minutes.

**Patentansprüche**

**1.** Ein gefrorenes Backteigfischprodukt (30), das Folgendes beinhaltet:

ein Fischsubstrat (32) mit einer äußeren Oberfläche (31);
einen frittierten Backteigüberzug (34) mit einer Innenfläche und einer Außenfläche (41), wobei die Innenfläche an die äußere Oberfläche (31) des Fischsubstrats (32) angrenzt und die Außenfläche (41) von der äußeren Oberfläche (31) des Fischsubstrats (32) um eine Trennungsdistanz (55, 57) beabstandet ist;
wobei der frittierte Backteigüberzug (34) erste Bereiche (38) und zweite Bereiche (36) aufweist, wobei die Trennungsdistanz (57) der zweiten Bereiche (36) größer als die Trennungsdistanz (55) der ersten Bereiche (38) ist;
wobei die ersten und zweiten Bereiche (38, 36) des Überzugs (34) ein vordefiniertes Muster darstellen, das sich über einen Abschnitt der Außenfläche (41) des Überzugs (34) erstreckt; und
eine wasserbasierte Schutzschicht (37), die den Überzug (34) an mindestens dem Abschnitt der Außenfläche (41) des Überzugs (34) mit dem vordefinierten Muster bedeckt.

**2.** Fischprodukt (30) gemäß Anspruch 1, wobei die Schutzschicht (37) eines oder mehrere aus einer Gruppe beinhaltet, die Trinkwasser, Bier, Ale, Apfelwein oder Lagerbier beinhaltet.

**3.** Fischprodukt (30) gemäß Anspruch 1 oder 2, wobei die Schutzschicht (37) zwischen 0,9 Gew.-% und 3 Gew.-% des gefrorenen Backteigfischproduktes (30) ausmacht.

**4.** Fischprodukt (30) gemäß einem der vorhergehenden Ansprüche, wobei die äußere Oberfläche (41) eine obere Oberfläche (33), eine gegenüberliegende planare Unterseitenoberfläche (35) und mindestens eine Seitenoberfläche (39) beinhaltet.

**5.** Ein Verfahren zum Herstellen eines gefrorenen Backteigfischproduktes (30), das Folgendes beinhaltet:

Überziehen eines gefrorenen oder teilgefrorenen Fischsubstrats (32) mit einem Backteig, der ein Backtriebmittel enthält;
Einführen des den Backteigüberzug aufweisenden Fischsubstrats (32) in eine Fritteuse (10), die ein Frittiermedium (15) enthält;
Modifizieren des Überzugs (34) auf dem Fischsubstrat (32) durch Erzeugen eines vordefinierten Musters von Erhebungen (26) und Senken (24) auf mindestens einem Bereich des Backteigüberzugs (34);
Entnehmen des den gemusterten Backteigüberzug (34) aufweisenden Fischsubstrats (32) aus der Fritteuse (10);
Aufbringen einer wasserbasierten Flüssigkeit auf den gemusterten Backteigüberzug, um eine Schutzschicht (37) auf mindestens dem Bereich des Überzugs (34) zu bilden, der das vordefinierte Muster aufweist;
Gefrieren des Fischsubstrats (32), das den Backteigüberzug (34) mit dem vordefinierten Muster und der Schutzschicht (37) aufweist.

**6.** Verfahren gemäß Anspruch 5, wobei der ein Backtriebmittel enthaltende Backteig eine Temperatur von zwischen 5 °C und 12 °C aufweist, wenn er auf das Fischsubstrat (32) aufgebracht wird.

7. Verfahren gemäß Anspruch 5 oder 6, wobei das Frittiermedium (15) zu weniger als 50 Gew.-% gesättigte Fette beinhaltet.

8. Verfahren gemäß Anspruch 5 oder 6, wobei das Frittiermedium (15) ein Pflanzenöl beinhaltet, das Sonnenblumenöl und/oder Rapsöl beinhaltet.

9. Verfahren gemäß den Ansprüchen 5-8, wobei die wasserbasierte Flüssigkeit eines oder mehrere aus einer Gruppe enthält, die Trinkwasser, Bier, Ale, Apfelwein und Lagerbier beinhaltet.

10. Verfahren gemäß den Ansprüchen 5-9, wobei der Ertrag des den frittierten Backteigüberzug (34) aufweisenden Fischsubstrats (32) nach Aufbringung der wässrigen Schutzschicht (37) in dem Bereich von 101 % bis 103 % liegt.

11. Verfahren gemäß den Ansprüchen 5-10, wobei eine oder mehrere rotierende Scheiben verwendet werden, um die Flüssigkeit während des Schritts des Aufbringens der Flüssigkeit auf den Überzug (34) zu zerstäuben.

12. Verfahren gemäß den Ansprüchen 5-10, wobei eine oder mehrere Düsen (42) verwendet werden, um die Flüssigkeit während des Schritts des Aufbringens der Flüssigkeit auf den Überzug (34) zu zerstäuben.

13. Verfahren gemäß den Ansprüchen 5-12, wobei ein Zeitraum zwischen der Entnahme des den gemusterten Backteigüberzug (34) aufweisenden Fischsubstrats (32) aus der Fritteuse (10) und der Aufbringung der Schutzschicht (37) in einem Bereich von zwischen 1 Sekunde und 15 Sekunden liegt.

14. Verfahren gemäß den Ansprüchen 5-13, wobei ein Zeitraum zwischen der Aufbringung der Schutzschicht (37) und dem Eintreten des Fischsubstrats (32) in ein Gefriergerät (50) in einem Bereich von zwischen 1 und 15 Sekunden liegt.

15. Verfahren gemäß den Ansprüchen 5-14, wobei die Zeit zwischen dem Eintreten des den Überzug (34) und die Schutzschicht (37) aufweisenden Fischsubstrats (32) in ein Gefriergerät (50) und der Zeit, wenn das Fischprodukt (30) vollständig gefroren ist, nicht mehr als 120 Minuten beträgt.

**Revendications**

1. Un produit de poisson pané congelé (30), comprenant :

un substrat de poisson (32) doté d'une surface extérieure (31) ;
un enrobage de pâte frite (34) doté d'une face intérieure et d'une face extérieure (41), où la face intérieure est adjacente à la surface extérieure (31) du substrat de poisson (32) et la face extérieure (41) est séparée de la surface extérieure (31) du substrat de poisson (32) par une distance de séparation (55, 57) ;
l'enrobage de pâte frite (34) ayant de premières régions (38) et de deuxièmes régions (36), où la distance de séparation (57) des deuxièmes régions (36) est plus grande que la distance de séparation (55) des premières régions (38) ;
les premières et deuxièmes régions (38, 36) de l'enrobage (34) représentant un motif prédéfini s'étendant sur une portion de la face extérieure (41) de l'enrobage (34) ; et
une couche protectrice à base aqueuse (37) recouvrant l'enrobage (34) au niveau au moins de la portion de la face extérieure (41) de l'enrobage (34) dotée du motif prédéfini.

2. Le produit de poisson (30) de la revendication 1, où la couche protectrice (37) comprend un ou plusieurs ingrédients d'un groupe comprenant l'eau potable, la bière, la bière de fermentation haute (« ale »), le cidre ou la bière de fermentation basse (« lager »).

3. Le produit de poisson (30) de la revendication 1 ou de la revendication 2, où la couche protectrice (37) représente entre 0,9 % en poids et 3 % en poids du produit de poisson pané congelé (30).

4. Le produit de poisson (30) de n'importe quelle revendication précédente, où la surface extérieure (41) comprend une surface de dessus (33), une surface de dessous planaire opposée (35) et au moins une surface latérale (39).

5. Un procédé pour la préparation d'un produit de poisson pané congelé (30), comprenant :

le fait d'enrober un substrat de poisson congelé ou semi-congelé (32) d'une pâte contenant un agent levant ;
le fait d'introduire le substrat de poisson (32) ayant l'enrobage de pâte dans une friteuse (10) contenant un milieu de friture (15) ;
le fait de modifier l'enrobage (34) sur le substrat de poisson (32) par création d'un motif prédéfini de crêtes (26) et de creux (24) sur au moins une région de l'enrobage de pâte (34) ;
le fait de retirer le substrat de poisson (32) ayant l'enrobage de pâte à motif (34) de la friteuse (10) ;

le fait d'appliquer un liquide à base aqueuse sur l'enrobage de pâte à motif afin de former une couche protectrice (37) sur au moins la région de l'enrobage (34) ayant le motif prédéfini ;

le fait de congeler le substrat de poisson (32) ayant l'enrobage de pâte (34) doté du motif prédéfini et de la couche protectrice (37).

6. Le procédé de la revendication 5, où la pâte contenant un agent levant est à une température comprise entre 5 °C et 12 °C lorsqu'elle est appliquée sur le substrat de poisson (32).

7. Le procédé de la revendication 5 ou de la revendication 6, où le milieu de friture (15) comprend moins de 50 % en poids de graisses saturées.

8. Le procédé de la revendication 5 ou de la revendication 6, où le milieu de friture (15) comprend une huile végétale comprenant l'huile de tournesol et/ou l'huile de colza.

9. Le procédé des revendications 5 à 8, où le liquide à base aqueuse contient un ou plusieurs ingrédients d'un groupe comprenant l'eau potable, la bière, la bière de fermentation haute, le cidre et la bière de fermentation basse.

10. Le procédé des revendications 5 à 9, où le rendement du substrat de poisson (32) ayant l'enrobage de pâte frite (34) est dans la gamme allant de 101 % à 103 % après application de la couche protectrice aqueuse (37).

11. Le procédé des revendications 5 à 10, où un ou plusieurs disques tournants sont utilisés afin d'atomiser le liquide durant l'étape consistant à appliquer le liquide sur l'enrobage (34).

12. Le procédé des revendications 5 à 10, où un ou plusieurs ajutages (42) sont utilisés afin d'atomiser le liquide durant l'étape consistant à appliquer le liquide sur l'enrobage (34).

13. Le procédé des revendications 5 à 12, où une période de temps s'écoulant entre le retrait du substrat de poisson (32) ayant l'enrobage de pâte à motif (34) de la friteuse (10) et l'application de la couche protectrice (37) est dans une gamme comprise entre 1 seconde et 15 secondes.

14. Le procédé des revendications 5 à 13, où une période de temps s'écoulant entre l'application de la couche protectrice (37) et l'entrée du substrat de poisson (32) dans un congélateur (50) est dans une gamme comprise entre 1 et 15 secondes.

15. Le procédé des revendications 5 à 14, où le temps s'écoulant entre l'entrée du substrat de poisson (32) ayant l'enrobage (34) et la couche protectrice (37) dans un congélateur (50) et le moment où le produit de poisson (30) est complètement congelé ne dépasse pas 120 minutes.

Fig. 1

Fig. 2

Fig. 3

Fig. 4

EP 3 930 479 B1

Fig. 5

Fig. 6

Fig. 7

Fig. 8

Fig. 9

Fig. 10

Coating fish substrate in
leavened batter — 70

↓

Frying batter coated fish substrate
and creating a pattern of ridges on
the fried batter coating — 71

↓

Spraying aqueous protecting
layer onto patterned batter
coating — 72

↓

Freezing — 73

Fig. 11

Fig. 12

Fig. 13

Fig. 14

EP 3 930 479 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0903084 A
- US 4386559 A
- US 2017245507 A1
- WO 9315619 A1
- US 4511583 A